# EUROPEAN PATENT SPECIFICATION

(11) **EP 4 050 989 B1**
(45) Date of publication and mention of the grant of the patent: **10.05.2023**
(21) Application number: 21708763.4
(22) Date of filing: 24.02.2021
(51) Int. Cl.: A01G 9/14, A01G 9/22, A01G 13/02

(54) **A SCREEN FOR GREENHOUSE OR FOR OUTDOOR CULTIVATIONS**
EIN SCHIRM FÜR GEWÄCHSHAUS ODER FÜR FREILANDKULTUREN
UN ÉCRAN POUR SERRE OU POUR CULTURES EN PLEIN AIR

(30) Priority: 24.02.2020 CH 2172020
(43) Date of publication of application: 07.09.2022
(73) Proprietor: Infrascreen SA, 2000 Neuchâtel (CH)
(72) Inventor: DE COMBAUD, Benoît, 1164 Buchillon (CH)
(74) Representative: ERNICKE Patent- und Rechtsanwälte PartmbB
(86) International application number: PCT/IB2021/051557
(87) International publication number: WO 2021/171205

(56) References cited:
- EP-A1- 3 424 298
- WO-A1-2011/096882
- WO-A1-2017/207568
- US-A- 2 564 708
- US-A- 4 066 815

## Description

### Field of the invention

The present invention concerns a filter for greenhouse or for outdoor cultivations adapted to optimize energy saving during winter. The present invention also relates to a selective infrared filter apparatus comprising a first and a second foldable filter selectively actuable as a function of the season. The present invention also concerns a method for operating the selective infrared filter apparatus as well as a method for manufacturing a foldable screen.

### Description of related art

Solar radiations are in the range from 300nm to 2'500nm of the solar spectrum. Solar radiations can be divided into ultraviolets from 300 to 400nm, photosynthetic active radiations in the spectral range from 400 nm to 700nm (the so-called PAR range), and non-photosynthetic radiation in the spectral range from 700nm to 2'500nm. Radiations up to 750nm may also impact photosynthesis and plant morphogenesis. For instance, it has been demonstrated that the ratio between red (660nm) and far-red (730nm) has a significant impact on morphogenesis. We will therefore refer to extended photosynthesis radiation (ePAR) for radiations in the spectral range from 400nm to 750nm.

During summertime, the air temperature and air humidity in a greenhouse is not optimal for plant production; therefore, various techniques have been developed to optimize temperature and humidity level. One technique consists of shading the greenhouse to reduce the amount of energy transferred by the sun to the greenhouse. Different shading solutions have been imagined such as fix or dynamic solutions and selective or non-selective solutions.

Energy represents up to 40% of production cost in heated greenhouse which is a major concern for the environment and users. There are three type of thermal energy losses: convective, conductive and radiative losses.

Radiative heat loss explains an important part of the energy loss, in particular during clear sky conditions (no clouds). Crop, soil and structure of the greenhouse radiates energy. In the usual winter temperatures (15 °C +/-10°), the majority of the radiated energy is in the far infrared with wavelengths between 3'000 and 50'000nm, with a peak between 5'000 and 20'000nm. Some of this radiation can pass through the greenhouse cover and the atmosphere to reach the cosmos.

Most of the technologies developed to mitigate radiative heat loss have however significant drawbacks. In ENERGY SAVING WITH "HORTIPLUS" GLASS by Benoit, Ir. F. and Ceustermans, Ir. (N. (1981). Acta Hortic. 107, 59-64), low emissivity glass has been tried to reduce radiative heat loss. This technology well known for building is not appropriate for greenhouse because of high investment cost, significant light loss and higher temperature during summer times and a lower productivity.

Deployable screens made of aluminium strips have been developed to reduce radiative heat loss. However, such screens are mainly designed for shading application during summer. Since light needs to reach the plan, only 30 to 50% of the greenhouse surface can be covered with aluminium strips, only a limited part of the radiation is reflected back inside the greenhouse. Moreover, these screens are usually not used during winter days as the light loss would be far too important.

Convective loss can be reduced by using "thermal screen" as disclosed in WO2013/041524. Thermal screens are deployed above the culture at critical moments. Such screens reduce light transmission by approximately 25% and therefore productivity. These screens are mainly used during the night, cloudy days with limited sunlight and when the temperature difference between the inside and the outside of the greenhouse is high. It is estimated that about 20% of energy saving can be achieved by using such screens.

A recent amelioration consists in adding an anti-reflective layer (AR layer) to the screen to increase light transmission and therefore reduce light loss when the screen is deployed as described in WO 2017/207568.

EP3424298A1 describes a heat-ray reflecting film structure used for cooling the interior of a greenhouse. The film reflects 70% or more of the infrared with wavelength of 800 to 1200nm and thus prevents infrared from the sun to warm the greenhouse at daytime.

EP2340706 describes a translucent substrate for greenhouse arranged for blocking light in the near and mid infrared range while being transparent in the photosynthetically active radiation spectral range. Since infrared from the sun are blocked, this filter is effective for reducing the temperature within the greenhouse. WO 2011/096882 A1 discloses a black-out screen for greenhouses which reduces solar light transmission by a least 98%. From US 2 564 708 A a heat screen of glass is known, to which a coating of oxide films is deposited by heating the glass uniformly to an elevated temperature of at least 500°C and atomizing a solution containing metal salts as a fine mist upon the heated glass for a time.

Although current thermal screens reduce convective loss, such screens do not reduce efficiently heat radiative losses during winter.

An aim of the present invention is to provide a filter for greenhouse or for outdoor cultivations which obviates or at least mitigates the above disadvantages of the prior art.

In particular, an aim of the present invention to provide a filter for greenhouse or for outdoor cultivations, adapted to optimize energy saving during winter by reducing convective and radiative loss.

### Brief summary of the invention

This main is achieved by means of a foldable screen for greenhouse or for outdoor cultivations, comprising:
a canvas;
a substrate on one side of the canvas, arranged for preventing convective heat transfer through the substrate and thus preventing or at least reducing conductive heat transfer through the screen;
at least one stack of films mounted on or adhering to said substrate, wherein said stack of film is adapted to
   - transmit at least 80% of radiations within the range from 400 nm to 2'500 nm when said radiations hit said film at normal incidence,
   - reject at least 70% of radiations at normal incidence within the range from 3'000 nm to 35'000 nm of the infrared spectrum.

The screen thus prevents convective heat loss and reduces radiative heat loss in the far infrared range, without shading the plants in the ePAR range.

The screen has a good transmittance in the near infrared range, for heating the greenhouse with infrared from the sun.

At least 80% of the sun radiations between 400 nm and 2'500 are thus transmitted.

This 80% transmittance within the range can be achieved even if the transmittance is lower than 80% for some wavelengths within that range.

In an embodiment, the stack of film is adapted to
- transmit a first percentage of radiations within the range from 400 nm to 750nm, when said radiation hit said film at normal incidence, and
- transmit a second percentage of radiation within the range from 850nm to 2'000nm,
wherein the first percentage is higher than the second percentage.

In an embodiment, the stack of film is adapted to
- transmit a first percentage of radiations within the range from 400 nm to 750nm, when said radiation hit said film at normal incidence, and
- transmit a second percentage of radiation within the range from 850nm to 2'000nm,
wherein the first percentage is at least 20% higher than the second percentage.

In an embodiment, the first and second percentages are for example at least 90% and at least 60% respectively.

The first range is useful in order to make sure that the plants receive enough light in the ePAR range. The second range is useful for heating the greenhouse with solar radiations in the near infrared range.

In an embodiment, at least 70%, preferably at least 80%, of the rejected radiations are rejected by reflection.

The at least one stack of thin films may comprise a conductive layer, a protective layer and an anti-reflective layer.

In an embodiment, the conductive layer is a layer of metal selected from the group comprising silver, copper, aluminum and gold, wherein the conductive layer has a thickness of less than 15nm, preferably less than 5nm, or possibly between 5 and 15nm

In an embodiment, the conductive layer is a transparent conductive oxide (TCO) layer such as tin oxide, indium tin oxide or zinc tin oxide, wherein the conductive layer has a thickness from 20nm to 200nm.

In an embodiment, the anti-reflective layer is a titanium dioxide (TiO₂) layer or a silicon dioxide (SiO₂) layer.

In an embodiment, said at least one stack of thin films faces cultivations when the screen is mounted in a greenhouse.

The substrate may be a polymer transparent within the spectral range from 400nm to 2'500nm, preferably between 400nm and 15'000nm.

The substrate may be for example polyethylene.

In an embodiment, the at least one stack of thin films is encapsulated between two layers of polymers, wherein the layer of polymer which faces cultivations when the screen is mounted in a greenhouse, is absorbent within the spectral range from 2'500nm to 15'000 nm, and preferably up to 35'000nm, while the other layer of polymer, which faces the sky, is transparent within the range from 2'500 nm to 15'000nm.

In an embodiment, the substrate comprises down-conversion particles for re-emitting light radiation in a different wavelength.

In an embodiment, the substrate has a thickness of no more than 50'000nm.

In an embodiment, the canvas comprises a plurality of parallel strings when said foldable screen is in an unfolded configuration. The substrate may comprise a plurality of strips arranged transversally to said plurality of parallel strings.

A selective infrared filter apparatus for greenhouse comprising a first foldable screen as previously described, and a second foldable screen adapted to
- reflect infrared radiations in the spectral range from 850 nm to 2'000 nm, and
- be transparent to radiations in the spectral range from 400 nm to 750 nm.

The second foldable screen may be used for protecting the plants from heat when the temperature in the greenhouse is too high.

The first and second foldable screen may be selectively unfolded or folded.

In an embodiment, the selective infrared filter apparatus further comprises:
- a first and a second actuable structure adapted to bring said first and second foldable screen respectively from a folded configuration to an unfolded configuration and vice-versa,
- driving means configured to actuate said first and second actuable structure,
- at least one motor arranged to power the driving means, and
- a computer configured to control the driving means to selectively drive said foldable screen and foldable filtering film, wherein the driving means are controlled as a function of at least one parameter.

In an embodiment, said at least one parameter is a delta temperature between a target temperature inside the greenhouse and the temperature outside the greenhouse.

In an embodiment, the temperature outside the greenhouse is obtained from a first temperature sensor arranged outside the greenhouse and the temperature inside the greenhouse is obtained from a second temperature sensor, the first and second sensors being configured to send data to the computer.

Another aspect of the invention relates to a method of operating the selective infrared filter apparatus as described above. The foldable screen and foldable filtering film are selectively brought from a folded configuration to an unfolded configuration and vice a versa in order to regulate the temperature inside the greenhouse around a target temperature.

In an embodiment, the method comprises
- controlling the driving means to bring said foldable screen from a folded configuration to an unfolded configuration and to maintain or bring said filtering film from an unfolded configuration to a folded configuration, when a first condition is met, and
- controlling the driving means to bring said foldable screen from an unfolded configuration to a folded configuration and to bring said foldable filtering film from a folded configuration to an unfolded configuration, when a second condition is met.

In an embodiment, the first condition is met when the delta temperature between the target temperature inside the greenhouse and the temperature outside the greenhouse falls below a predetermined delta value, while the second condition is met when the delta temperature between the target temperature inside the greenhouse and the temperature outside the greenhouse exceeds said predetermined delta value.

### Brief Description of the Drawings

The invention will be better understood with the aid of the description of embodiments given by way of examples and illustrated by figures of prior art and embodiments of the present invention, in which:
Figure 1 shows a greenhouse with one or a plurality of screens,
Figure 2 shows strips of a film interlaced with a yarn framework,
Figure 3 is a schematic view of a stack of films according to a first embodiment,
Figure 4 shows a simulation of the Transmission spectrum observed for: i) curve 1, a naked polyethylene film, ii) curve 2, a polyethylene film coated with a stack of copper (2 nm) / TiO₂ (5 nm), iii) curve 3, a polyethylene film coated with a stack of ITO (120 nm) and iv) curve 4, a polyethylene film coated with a stack of ITO (120 nm) / SiO₂ (130 nm).

### Detailed Description of possible embodiments of the Invention

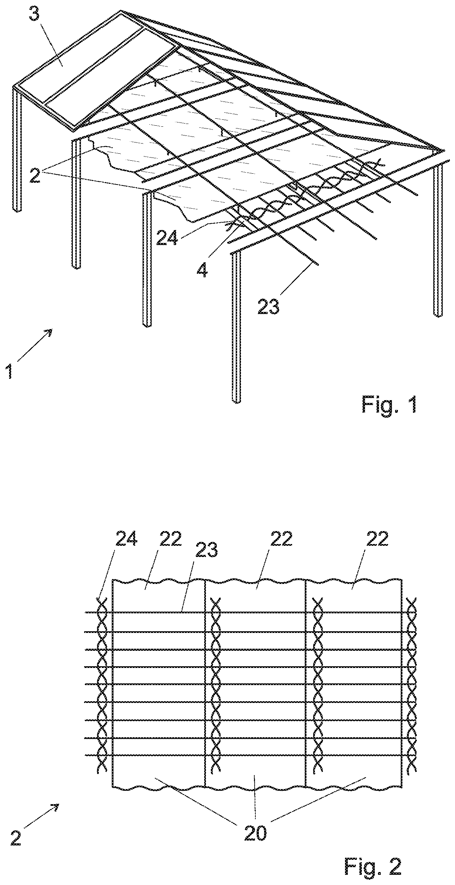

Figure 1 shows a greenhouse 1 with a plurality of filters in the form of screens 2 or curtains, as well as a cable mechanism 4 used to fold or unfold the screens by pulling them across or aside. Contrary to a cladding 3 which is fixed, such as a glass cladding, a screen 2 can be moved to cover or uncover the crop under production. The screens 2 are designed to preserve the heat within the greenhouse by partially reflecting infrared radiation.

The screen is also a "thermal screen" and therefore designed to reduce or preferably suppress the exchange rate of air from one side of the filter and the other side, thus preventing or at least reducing convective heat loss.

In the example of Figure 1, each screen 2 comprises a plurality of strips 20 which are, in the example, adjacent so that air cannot flow between the strips, thus preventing air transfer. Spaced apart strips 22 may also be used if a limited heat or humidity transfer is desired. The strips may comprise a substrate, and be mounted onto a canvas, such as a yarn framework 21 with textile or polymer threads 23. The threads 23 are preferably running parallel to each other and spaced apart so that they do not shade the cultures. Several threads might be connected between the strips with threads running in an orthogonal direction.

Each strip 20 comprises a substrate such as a polymer film 22 on at least one side of this fabric, and at least one stack of films that provide the filtering function and that are mounted on or adhering to the polymer film 22. The strips are mounted onto the canvas 21.

The polymer substrate is preferably transparent in the range between 400 and 30'000nm. The substrate may be a polyester substrate. The substrate may be a polyethylene substrate.

A material is said to be transparent in a range when at least 70%, preferably at least 80% of the radiation at normal incidence at each wavelength within that range is transmitted through the material. A material is said to be reflective in a range when at least 70%, preferably at least 80% of the radiation at normal incidence at each wavelength within that range is reflected by the material.

The canvas 21 maintains the strips together. It prevents air to flow through the screen but allows the transfer of solar and thermal radiations. The canvas also allows water vapor to pass through the screen.

Figure 2 shows a screen inside a greenhouse and the cable mechanism used to pull it across or aside is shown.

In an embodiment of the invention, the strips/yarn of the foldable screen are made from a polymer coated with a stack of films designed to:
- reject a significant (> 70 %, preferably at least 80%) part of the radiations in the spectral range from 3'000 nm to 50'000 nm and above,
- transmit a significant (> 90%) part of the radiations in the ePAR range and preferably > 60% in the [400 - 2'500 nm] range.

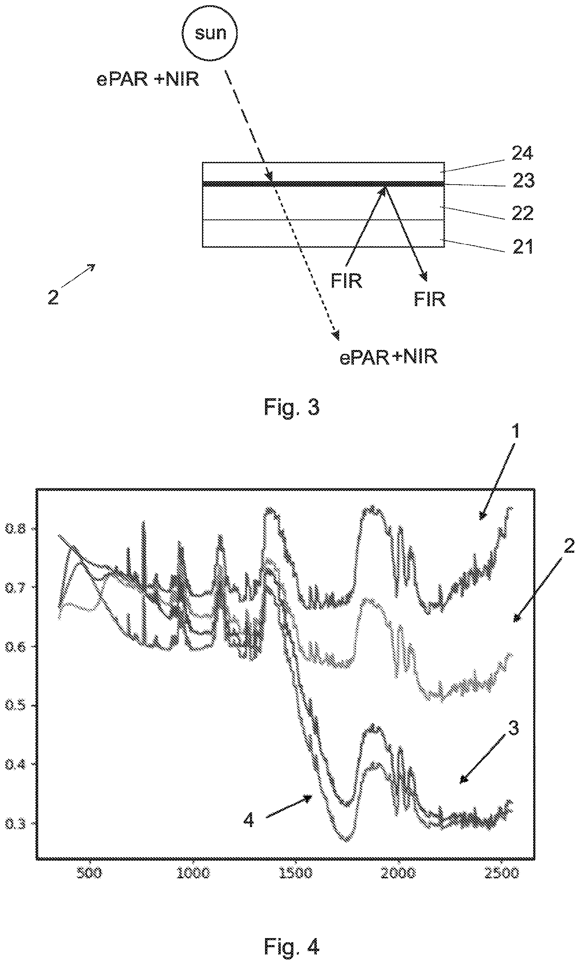

In the first embodiment shown on Figure 3, the filter 2 comprises a substrate 22 mounted onto a canvas 21 and onto which a stack of films 23 is coated. Optionally, a protective layer 24 may cover the stack of films 23 from mechanical or chemical aggressions.

The stack of films 23 may comprise at least one film of metal, such as copper, deposited on the polymeric substrate. In one example, the stack of films comprises a copper layer with a thickness of about less than 15nm, for example 2nm and TiO₂ layer with a thickness of about 5 nm deposited on the polymeric substrate 22.

The TiO₂ layer acts as an anti-reflective layer increasing the transmission in the ePAR range.

This embodiment allows the production of foldable screen at low cost. It also allows the production of an efficient filter with a limited amount of material (copper and TiO₂) to coat the film.

The stack of films described above has also the advantage to be transparent in the ePAR spectrum and to have good reflectivity properties in the thermal far infrared after 8'000 nm.

Absorption may occur as well due to the metallic nature of the film but will be limited to for instance 10% and no more than 30% of rejected radiations depending on the material used in the different layers and their thickness.

In another, less preferred embodiment, the stack of films may comprise a transparent conductive oxide (TCO) layer such as tin oxide, Indium tin oxide (ITO) or Zinc tin Oxide (ZTO).

A protective layer may be added as well as an anti-reflective layer such as SiO₂ layer with the aim to reduce the difference of refraction index between the air and the stack. For instance, by coating a layer of ITO with a thickness of about 120 nm on a Polyethylene (PE) substrate and a layer of SiO₂ with a thickness of about 130 nm on top of the ITO layer as an anti-reflective layer, a film is obtained which allows transmission therethrough of 70% of the radiations in the ePAR spectrum and as much as 60% of the NIR while such film reflects 70% of the thermal far infrared.

Manufacturing such a film is easy and well mastered but the amount of expensive material required is important compared to the first embodiment, hence the cost of production is significantly higher.

In both embodiments, the coating is preferably on the inner side of the substrate (i.e. the side that will face the crop under production. An additional layer of polymer substrate 24 may be added in a way that the coating is in sandwich between the two polymer substrates. This additional protective substrate 24 has to be transparent to thermal far infrared (5'000 to 15'000nm, preferably 5'000 to 20'000 nm) which is for instance the case of polyethylene (PE).

The screen may be manufactured according to different manufacturing processes. In an embodiment, the film is cut in strips to be incorporated in a yarn framework to form a screen. The film used for the strips has to be thin enough to be compatible with current production process and later facilitate the folding and unfolding of the screen. The strips may for example have a thickness of about 20 to 50 microns but no more than 200 microns. The polymer substrate is selected according to its optical and mechanical properties such as spectral transfer function, UV resistance, flame retardant and compatibility with greenhouse/outside environment.

In an embodiment, down-conversion additives can be incorporated to the substrate. Different pigments organic or inorganic like: quantum dots, phosphorous pigments have the property to absorb light in a given range of wavelength and emit light in another higher range of wavelength.

In an embodiment, the film is manufactured using a spatial atomic layer deposition (S-ALD) in a roll-to-roll configuration. In another embodiment, the polymer substrate is held for example on a roll and unwound from said roll. In a first treatment step, the substrate is heated to remove the non-volatile components. Then the next step is the coating *per se* with the desired thin film layers. This can be done using different technologies, for example by sputtering, e.g. DC sputtering or RF sputtering. The choice may depend on the material being deposited for the coating. For example, for Indium Tin Oxide (ITO), a DC sputtering may be used, for SiO₂ a RF sputtering may be used.

After the coating step, an additional layer of polymer may be added through lamination above the stack of thin films, then the film is again wound on a roll for future use or process steps. Additional steps may comprise measurements means, such as optical means, to control the deposited layers and their thickness or quality.

The film roll is then unwound to be cut in strips that will be incorporated in line in the yarn framework in the screen manufacturing process. To cut the strips, an ultrasonic device or alternatively a laser will be used to cauterize the lateral edges of the strips by melting the substrate, thereby offering a better protection against greenhouse/outside environment and preventing air water vapor to alter the different thin films.

The strips may be cut using for instance a state-of-the-art ultrasonic device that will make possible to cover the lateral edges of the strips by melted polymer from the substrate, thereby preventing water vapor to contaminate the stacks once the strips are incorporated in the screen and places in a humid environment.

The deployment of the foldable screen may be controlled by a computer. At least two temperature sensors: one inside and one outside the greenhouse are configured to provide temperature measurements to a computer program running on the computer. At least two PAR sensors, one inside and one outside the greenhouse, are configured to provide continuous measurements of the PAR inside and outside the greenhouse. One pyrometer placed inside the greenhouse/shade house is configured to provide continuous measurements of received thermal infrared and then measure sky clarity.

The computer program is configured to operate the deployment of the foldable screen as follows:
**If** the difference of temperatures inside and outside the greenhouse is superior to a cloudy temperature setpoint, **and** the sky is cloudy, **and** the solar radiations are inferiors to a cloudy light setpoint, the screen is brought to a folded configuration.
**If** the difference of temperatures inside and outside the greenhouse is inferior to the cloudy temperature setpoint, **and** the sky is cloudy, **and** the solar radiations are inferiors to the cloudy light setpoint, the screen is brought to an unfolded configuration.
**If** the difference of temperatures inside and outside the greenhouse is superior to a clear sky temperature setpoint, **and** the sky is clear, **and** the solar radiations are superiors to a clear sky temperature setpoint, the screen is brought to an unfolded configuration.

## Claims

1. A foldable screen for greenhouse or for outdoor cultivations, comprising:
a canvas (21);
a substrate (22) on one side of the canvas (21), arranged for preventing convective heat transfer through the screen;
at least one stack of films (23) mounted on or adhering to said substrate (22), wherein said stack of films (23) is adapted to:
- transmit at least 80% of radiations within the range from 400 nm to 2'500 nm when said radiations hit said film at normal incidence,
- reject at least 70%, preferably at least 80% of radiations at normal incidence within the range from 3'000 nm to 35'000 nm.

2. The foldable screen according to claim 1, wherein said stack of films (23) is adapted to
- transmit a first percentage of radiations within the range from 400 nm to 750nm, when said radiation hit said film at normal incidence, and
- transmit a second percentage of radiation within the range from 850nm to 2'000nm,
wherein the first percentage is higher than the second percentage, the first and second percentages being for example at least 90% and at least 60% respectively.

3. The foldable screen according to claim 1 or 2, wherein said stack of films (23) is arranged so that at least 70% of the rejected radiations are rejected by reflection.

4. The foldable screen according to any of claims 1 to 3, wherein said at least one stack of thin films (23) is coated on the substrate (22) and comprises a conductive layer, and optionally a protective layer and/or an anti-reflective layer.

5. The foldable screen according to claim 4, wherein the conductive layer is a layer of metal selected from the group comprising silver, copper, aluminum and gold, wherein the conductive layer has a thickness of less than 15nm.

6. The foldable screen according to claim 4, wherein the conductive layer is a transparent conductive oxide (TCO) layer such as tin oxide, indium tin oxide or zinc tin oxide, wherein the conductive layer has a thickness from 20nm to 200nm.

7. The foldable screen according to any of claims 4 to 6, wherein the anti-reflective layer is a titanium dioxide (TiO₂) layer or a silicon dioxide (SiO₂) layer.

8. The foldable screen according to any preceding claims, wherein said at least one stack of films (23) faces cultivations when the screen is mounted in a greenhouse and wherein the substrate is a polymer transparent to radiation within the spectral range from 400nm to 2'500nm, for example polyethylene.

9. The foldable screen according to any of claims 1 to 7, wherein said at least one stack of films (23) is encapsulated between two layers of polymers, wherein the layer of polymer which faces cultivations when the screen is mounted in a greenhouse, is absorbent within the spectral range from 2'500nm to 15'000nm while the other layer of polymer, which faces the sky, is transparent within the range from 2'500 nm to 15'000nm.

10. The foldable screen according to any preceding claims, wherein the substrate comprises down-conversion particles.

11. The foldable screen according to any preceding claims, wherein the substrate has a thickness of no more than 50'000 nm.

12. The foldable screen according to any preceding claims, wherein the canvas (21) comprises a plurality of parallel strings when said foldable screen is in an unfolded configuration, and wherein said substrate (22) comprises a plurality of strips arranged transversally to said plurality of parallel strings.

13. A selective infrared filter apparatus for greenhouse comprising a first foldable screen according to any of the preceding claims, and a second foldable screen adapted to
- reflect infrared radiations in the spectral range from 850 nm to 2'000 nm, and
- be transparent to radiations in the spectral range from 400 nm to 750 nm.

14. The selective infrared filter apparatus according to claim 13, further comprising:
- a first and a second actuable structure adapted to bring said first and second foldable screen respectively from a folded configuration to an unfolded configuration and vice-versa,
- driving means configured to actuate said first and second actuable structure,
- at least one motor arranged to power the driving means, and
- a computer configured to control the driving means to selectively drive said foldable screen and foldable filtering film, wherein the driving means are controlled as a function of at least one parameter.

15. Method of operating the selective infrared filter apparatus according to any of claims 13 to 14, wherein said foldable first screen and foldable second screen are selectively brought from a folded configuration to an unfolded configuration and vice-in order to regulate the temperature inside the greenhouse around a target temperature.

## Patentansprüche

1. Ein faltbarer Schirm für Gewächshauskulturen oder für Freilandkulturen, umfassend:
Ein Tuch (21);
Ein Substrat (22) auf einer Seite des Tuchs, das so angeordnet ist, dass es eine konvektive Wärmeübertragung durch den Schirm verhindert;
Zumindest einen Stapel von Dünnschichten (23), der auf dem Substrat (22) angebracht ist oder an diesem haftet, wobei der Stapel von Dünnschichten (23) dazu ausgebildet ist:
- mindestens 80% der Strahlung im Bereich von 400 nm bis 2'500 nm durchzulassen, wenn die Strahlung bei Normalinzidenz auf die Dünnschicht trifft;
- mindestens 70 %, vorzugsweise mindestens 80 % der Strahlung bei Normalinzidenz im Bereich von 3'000 nm bis 35'000 nm abzuweisen.

2. Der faltbare Schirm nach Anspruch 1, wobei der Stapel von Dünnschichten (23) dazu ausgebildet ist,
- einen ersten Prozentanteil der Strahlung im Bereich von 400 nm bis 750 nm durchzulassen, wenn die Strahlung Normalinzidenz auf die Dünnschicht trifft, und
- einen zweiten Prozentanteil der Strahlung im Bereich von 850nm bis 2'000 nm durchzulassen,
wobei der erste Prozentanteil höher ist als der zweite Prozentanteil, wobei insbesondere der erste Prozentanteil zumindest 90% und der zweite Prozentanteil zumindest 60% beträgt.

3. Der faltbare Schirm nach Anspruch 1 oder 2, wobei der Stapel von Dünnschichten (23) so angeordnet ist, dass mindestens 70 % der abgewiesenen Strahlung durch Reflexion abgewiesen werden.

4. Der faltbare Schirm nach einem der Ansprüche 1 bis 3, wobei der Stapel von Dünnschichten (23) auf das Substrat (22) aufgebracht ist und eine leitfähige Schicht und gegebenenfalls eine Schutzschicht und/oder eine Antireflexionsschicht umfasst.

5. Der faltbare Schirm nach Anspruch 4, wobei die leitfähige Schicht eine Metallschicht ist, die aus der Gruppe ausgewählt ist, die Silber, Kupfer, Aluminium und Gold umfasst, wobei die leitfähige Schicht eine Dicke von weniger als 15 nm aufweist.

6. Der faltbare Schirm nach Anspruch 4, wobei die leitfähige Schicht eine transparente leitfähige Oxidschicht (TCO) wie Zinnoxid, Indiumzinnoxid oder Zinkzinnoxid ist, wobei die leitfähige Schicht eine Dicke von 20nm bis 200nm hat.

7. Der faltbare Schirm nach einem der Ansprüche 4 bis 6, wobei die Antireflexionsschicht eine Titandioxid- (TiO₂) Schicht oder eine Siliziumdioxid- (SiO₂) Schicht ist.

8. Der faltbare Schirm nach einem der vorhergehenden Ansprüche, wobei der mindestens eine Stapel von Dünnschichten (23) den Kulturen zugewandt ist, wenn der Schirm in einem Gewächshaus montiert ist, und wobei das Substrat ein Polymer ist, das für Strahlung im Spektralbereich von 400nm bis 2'500nm transparent ist, beispielsweise Polyethylen.

9. Der faltbare Schirm nach einem der Ansprüche 1 bis 7, wobei der mindestens eine Stapel von Dünnschichten (23) zwischen zwei Polymerschichten eingekapselt ist, wobei die Polymerschicht, die den Kulturen zugewandt ist, wenn der Schirm in einem Gewächshaus angebracht ist, im Spektralbereich von 2'500 nm bis 15'000 nm absorbierend ist, während die andere Polymerschicht, die dem Himmel zugewandt ist, im Bereich von 2'500 nm bis 15'000 nm transparent ist.

10. Der faltbare Schirm nach einem der vorhergehenden Ansprüche, wobei das Substrat Down-Conversion-Partikel enthält.

11. Der faltbare Schirm nach einem der vorhergehenden Ansprüche, wobei das Substrat eine Dicke von nicht mehr als 50'000 nm aufweist.

12. Der faltbare Schirm nach einem der vorhergehenden Ansprüche, wobei das Tuch (21) eine Vielzahl von parallelen Strängen umfasst, wenn sich der faltbare Schirm in einer ungefalteten Konfiguration befindet, und wobei das Substrat (22) eine Vielzahl von Streifen umfasst, die quer zu der Vielzahl von parallelen Strängen angeordnet sind.

13. Selektive Infrarotfiltervorrichtung für Gewächshäuser mit einem ersten faltbaren Schirm nach einem der vorhergehenden Ansprüche und einem zweiten faltbaren Schirm, der so ausgebildet ist, dass er:
- Infrarotstrahlung in einem Spektralbereich von 850nm bis 2'000 nm reflektiert, und
- für Strahlung im Spektralbereich von 400 nm bis 750 nm transparent ist.

14. Die Selektive Infrarotfiltervorrichtung nach Anspruch 13, weiter umfassend:
- eine erste und eine zweite betätigbare Struktur, die geeignet sind, den ersten und den zweiten faltbaren Schirm aus einer gefalteten Konfiguration in eine ungefaltete Konfiguration zu bringen, und umgekehrt,
- Antriebsmittel zur Betätigung der ersten und zweiten betätigbaren Struktur,
- mindestens einen Motor, der die Antriebsmittel antreibt, und
- einen Computer, der so konfiguriert ist, dass er die Antriebsmittel steuert, um den faltbaren Schirm und die faltbare Filter-Dünnschicht selektiv anzutreiben, wobei die Antriebsmittel in Abhängigkeit von mindestens einem Parameter gesteuert werden.

15. Verfahren zum Betrieb der selektiven Infrarotfiltervorrichtung nach einem der Ansprüche 13 oder 14, wobei der erste faltbare Schirm und der zweite faltbare Schirm selektiv von einer gefalteten Konfiguration in eine ungefaltete Konfiguration und umgekehrt gebracht werden, um die Temperatur innerhalb des Gewächshauses um eine Zieltemperatur zu regulieren.

## Revendications

1. Ecran pliable pour serre ou pour cultures de plein air, comprenant :
une toile (21) ;
un substrat (22) sur un côté de la toile (21), agencé pour empêcher un transfert de chaleur convectif à travers l'écran ;
au moins un empilement de films (23) monté sur ou adhérant audit substrat (22), dans lequel ledit empilement de films (23) est adapté pour :
- transmettre au moins 80 % de rayonnements à l'intérieur de la gamme de 400 nm à 2500 nm quand lesdits rayonnements frappent ledit film en incidence normale,
- rejeter au moins 70 %, de préférence au moins 80 % de rayonnements en incidence normale à l'intérieur de la gamme de 3000 nm à 35 000 nm.

2. Ecran pliable selon la revendication 1, dans lequel ledit empilement de films (23) est adapté pour
- transmettre un premier pourcentage de rayonnements à l'intérieur de la gamme de 400 nm à 750 nm, quand lesdits rayonnements frappent ledit film en incidence normale, et
- transmettre un deuxième pourcentage de rayonnements à l'intérieur de la gamme de 850 nm à 2000 nm,
dans lequel le premier pourcentage est supérieur au deuxième pourcentage, les premier et deuxième pourcentages étant par exemple au moins 90 % et au moins 60 %, respectivement.

3. Ecran pliable selon la revendication 1 ou 2, dans lequel ledit empilement de films (23) est agencé de telle sorte qu'au moins 70 % des rayonnements rejetés sont rejetés par réflexion.

4. Ecran pliable selon l'une quelconque des revendications 1 à 3, dans lequel ledit au moins un empilement de films (23) est déposé sur le substrat (22) et comprend une couche conductrice, et éventuellement une couche protectrice et/ou une couche antireflet.

5. Ecran pliable selon la revendication 4, dans lequel la couche conductrice est une couche de métal choisi dans le groupe comprenant l'argent, le cuivre, l'aluminium et l'or, dans lequel la couche conductrice a une épaisseur de moins de 15 nm.

6. Ecran pliable selon la revendication 4, dans lequel la couche conductrice est une couche d'oxyde conducteur transparent (TCO) tel que l'oxyde d'étain, l'oxyde d'indium et d'étain ou l'oxyde de zinc et d'étain, dans lequel la couche conductrice a une épaisseur de 20 nm à 200 nm.

7. Ecran pliable selon l'une quelconque des revendications 4 à 6, dans lequel la couche antireflet est une couche de dioxyde de titane (TiOz) ou une couche de dioxyde de silicium (SiO₂).

8. Ecran pliable selon l'une quelconque des revendications précédentes, dans lequel ledit au moins un empilement de films (23) fait face à des cultures quand l'écran est monté dans une serre et dans lequel le substrat est un polymère transparent au rayonnement à l'intérieur de la gamme spectrale de 400 nm à 2500 nm, par exemple du polyéthylène.

9. Ecran pliable selon l'une quelconque des revendications 1 à 7, dans lequel ledit au moins un empilement de films (23) est encapsulé entre deux couches de polymères, dans lequel la couche de polymère qui fait face à des cultures quand l'écran est monté dans une serre est absorbante à l'intérieur de la gamme spectrale de 2500 nm à 15 000 nm tandis que l'autre couche de polymère, qui fait face au ciel, est transparente à l'intérieur de la gamme de 2500 nm à 15 000 nm.

10. Ecran pliable selon l'une quelconque des revendications précédentes, dans lequel le substrat comprend des particules de conversion descendante.

11. Ecran pliable selon l'une quelconque des revendications précédentes, dans lequel le substrat a une épaisseur ne dépassant pas 50000 nm.

12. Ecran pliable selon l'une quelconque des revendications précédentes, dans lequel la toile (21) comprend une pluralité de cordes parallèles quand ledit écran pliable est dans une configuration dépliée, et dans lequel ledit substrat (22) comprend une pluralité de bandes agencées transversalement à ladite pluralité de cordes parallèles.

13. Appareil à filtre infrarouge sélectif pour serre comprenant un premier écran pliable selon l'une quelconque des revendications précédentes, et un deuxième écran pliable adapté pour
- réfléchir des rayonnements infrarouges dans la gamme spectrale de 850 nm à 2000 nm, et
- être transparent à des rayonnements dans la gamme spectrale de 400 nm à 750 m.

14. Appareil à filtre infrarouge sélectif selon la revendication 13, comprenant en outre :
- une première et une deuxième structure actionnable adaptées pour amener lesdits premier et deuxième écrans pliables, respectivement, d'une configuration pliée à une configuration dépliée et vice versa,
- des moyens d'entraînement configurés pour actionner lesdites première et deuxième structures actionnables,
- au moins un moteur agencé pour faire marcher les moyens d'entraînement, et
- un ordinateur configuré pour contrôler les moyens d'entraînement pour entraîner sélectivement lesdits écran pliable et film filtrant pliable, dans lequel les moyens d'entraînement sont contrôlés en fonction d'au moins un paramètre.

15. Procédé de fonctionnement de l'appareil à filtre infrarouge sélectif selon l'une quelconque des revendications 13 à 14, dans lequel lesdits premier écran pliable et deuxième écran pliable sont sélectivement amenés d'une configuration pliée à une configuration dépliée et vice versa afin de réguler la température à l'intérieur de la serre autour d'une température cible.
